# EUROPEAN PATENT APPLICATION

(11) **EP 1 365 341 A2**
(43) Date of publication of application: **26.11.2003**
(21) Application number: 03100014.4
(22) Date of filing: 07.01.2003
(51) Int. Cl.: G06F 17/60

(54) **A complexity management and production optimization method and system**

(30) Priority: 24.01.2002 US 683608
(71) Applicant: Ford Global Technologies, Inc., Dearborn, Michigan 48126 (US)
(72) Inventor: Lubash, John, Julius, Northville, MI 48167 (US); Hyrila, Alan, Edward, Northville, MI 48167 (US)
(74) Representative: Messulam, Alec Moses

(57) **Abstract**

A complexity management and production optimization method and system 10 is disclosed for use within a manufacturing facility 12 having a computer system 28, data acquisition assemblies 22, 24, 26 and a notification assembly 30.

The computer 28 creates a dynamically modifiable schedule based on unique input variables and available resources such as customer orders 125 and the data received from the data acquisition assemblies 22, 24, and 26 and the system 10 is operable to communicate any modification to the production schedule to the appropriate production facility employees via a notification assembly 30.

## Description

The present invention generally relates to a complexity management and production optimization system. More particularly, the present invention relates to a computer based system which analyzes multiple inputs, variables and constraints and uses these in combination with demand information to periodically or continuously modify a demand schedule, effective to allow the demands to be met within the constraints present and in accordance with unique input variables.

Ideally, business enterprises wish to optimize its business processes to maximize throughput while minimizing cost and delay. Typically, these processes must account for a plurality of unique input variables and available resources in developing a demand schedule for the end product or output. For example, a manufacturing facility capable of building several uniquely designed parts or assemblies having many different part options ("complexity") may require several different operators having very specific training or other information on the fabrication of the desired part.

The availability of these trained operators ("available resources"), their absence or vacation schedules, the amount of raw materials needed for fabrication, etc., ("unique input variables") must be taken into account in developing and modifying a demand schedule. Likewise, a shipping facility needs to know the number and sizes of payloads of its trucks, final destinations and preferred routes the trucks will take, the availability of operators qualified to drive the various trucks and many other uniquely identifiable inputs and available resources to develop an optimized demand schedule of delivery.

As a further example, a conventional business enterprise obtains customer orders for uniquely described items ("complexity") and communicates these orders to its manufacturing plants or production facilities in order to allow the orders to be "filled" (i.e., to allow the demanded products to be manufactured and shipped to its customers). Typically, these orders are generally placed within a production queue in a position only partially defined or determined by the respective date that each order was received or placed within the queue by use of a scheduling algorithm. Conventionally, the scheduling algorithm analyzes the received orders in combination with the respective components that each order requires and, based upon this analysis, places each of the received orders in a certain position within the production queue.

While this approach does initially allow production scheduling to be optimally achieved according to some predetermined optimization parameters (e.g., the highest margin units may be built first and substantially similar units are built or produced in a substantially contiguous group, thereby reducing the need to change tooling), this approach does not easily allow the production schedule to be dynamically changed or updated in response to the ever changing conditions of the production environment and does not easily allow the production schedule to be periodically and/or continuously optimized based upon these ever changing production conditions.

It is an object of this invention to provide an improved method and system for managing a plurality of unique input variables and available resources to produce an optimized output.

According to a first aspect of the invention there is provided a method for producing products by the use of various materials and assemblies, the method comprising the steps of creating a production schedule; monitoring the materials and the assemblies and dynamically modifying the production schedule in response to the monitoring of the materials and the assemblies.

The step of creating a production schedule may further comprise the steps of receiving customer orders; grouping the customer orders in a certain priority and determining the production scheduled based on the grouping.

The step of monitoring the materials and the assemblies may further comprise the steps of determining a location of the materials and determining a quantity of the materials.

The step of monitoring the materials and the assemblies may further comprise the step of determining the operational status of the assemblies.

The step of dynamically modifying the production schedule in response to the monitoring of the materials and the assemblies may further comprise the steps of comparing a desired quantity described in the customer orders to the determined quantity of the materials; re-grouping the customer orders in a second certain priority based on the comparison and determining the modified production schedule based on the re-grouping.

The step of dynamically modifying the production schedule in response to the monitoring of the materials and the assemblies may further comprise the steps of notifying at least one assembly employee of the modified production schedule and notifying at least one material transport employee of the modified production schedule.

The step of dynamically modifying the production schedule in response to the monitoring of the materials and the assemblies may further comprise the steps of notifying at least one material supplier of the modified production schedule.

The step of monitoring the materials and the assemblies may comprise monitoring the production schedule; receiving a quantity of a final product type from at least one manufacturing employee and determining whether the quantity matches the production schedule.

The method may further comprise the step of selectively ordering at least one of the materials in response to the monitoring of the materials.

According to a second aspect of the invention there is provided a complexity management system for managing a plurality of unique input variables and available resources to produce an optimized output characterised in that the complexity management system includes a first portion which selectively generates a demand schedule, a second portion which monitors said unique input variables and the available resources and which generates a signal to the first portion, based upon the monitoring of the input variables and available resources, effective to cause the demand schedule to be modified dynamically in a certain manner so as to optimize said output.

The first portion may comprise at least one computer.

The second portion may comprise at least one data acquisition assembly which is communicatively coupled to the first portion.

The at least one data acquisition assembly may acquires information on the available resources including a location and a quantity of the available resources.

The data acquisition assembly may further include at least one sensor tag which is physically disposed on the available resources.

The at least one data acquisition assembly is operative to interrogate the at least one sensor tag to retrieve information.

The at least one data acquisition assembly may further comprise at least one radio transmitter/receiver assembly.

Advantageously, the at least one data acquisition assembly further comprises at least one tag reader.

The first portion may further comprise a notification assembly, the notification assembly being effective to communicate the modified demand schedule to the available resources.

The notification assembly may include at least one display.

The notification assembly may create at least one icon having a first coloured portion and a second coloured portion which abut on at least two but no more than three sides.

The notification assembly may further comprise a communications interface assembly which is effective to communicate the modified demand schedule to a supplier of the available resources.

The system may be a production optimisation system for use with a production facility, the unique input variables and available resources may be certain materials and certain production assemblies and the optimised output may be the creation of products by the use of the production facility, the demand schedule selectively produced by the first portion may be a production schedule, the second portion may monitor the production assemblies and the materials and may generate a signal to the first portion and, based upon the monitoring of the production assemblies and the materials, the system may be effective to cause the production schedule to be modified in a certain manner.

According to a third aspect of the invention there is provided a method for managing a plurality of unique input variables and available resources to produce a desired output characterised in that the method comprises the steps of creating a demand schedule, monitoring the input variables and available resources and dynamically modifying the demand schedule in response to the monitoring of the input variables and available resources.

The method may further comprise the step of creating a demand schedule comprising the steps of receiving desired orders, grouping the desired orders in a certain priority; and determining the demand scheduled based on the grouping.

The step of dynamically modifying the demand schedule in response to the monitoring of the input variables and available resources may further comprise the steps of comparing a desired quantity described in the desired orders to the determined quantity of the available resources, re-grouping the desired orders in a second certain priority based on the comparison and determining the modified demand schedule based on the re-grouping.

The step of dynamically modifying the demand schedule in response to the monitoring of the available resources may further comprise the steps of notifying at least one resource supplier of the modified demand schedule.

According to a fourth aspect of the invention there is provided a production optimization system for use with a production facility comprising a material inventory assembly, a material transport assembly, and a manufacturing assembly, the production optimization system comprising a computer system which is capable of receiving customer orders and which determines a production schedule based on the customer orders; at least one sensor tag which is physically disposed on materials and components within the production facility; at least one data acquisition assembly which interrogates the at least one sensor tag for information and which is communicatively coupled to the computer system and a notification assembly which is communicatively coupled to the computer system, the material inventory assembly, the material transport assembly, and the manufacturing assembly.

The at least one data acquisition assembly may include at least one radio transmitter/receiver assembly.

The at least one data acquisition assembly may further include at least one tag reader.

The notification assembly may include at least one display.

The notification assembly may create at least one icon having a first coloured portion and a second coloured portion which abut on at least two but no more than three sides.

The invention will now be described by way of example with reference to the accompanying drawing of which:-
Figure 1 is a block diagram of a production optimization system which is made in accordance with the teachings of the preferred embodiment of the invention and which is shown operatively used in combination with a conventional production system;
Figure 2 is a schematic diagram of a first portion of the production optimization system which is shown in Figure 1 and the material inventory assembly which is shown in Figure 1;
Figure 3 is a schematic diagram of a second portion of the production optimization system which is shown in Figure 1 and the material transport and manufacturing/production assemblies which are shown in Figure 1; and
Figure 4 is a diagrammatic view of an icon which is created by the notification assembly which is shown in Figure 1.

For ease in understanding, the present invention will be described in the context of a production facility for producing assemblies made from many combinations of parts and sub-parts.

However, the present invention is not limited by this example and can be used in any system or process in which a plurality of unique input variables and available resources are used and monitored by a demand schedule to optimize the output of the system. Examples of non-limiting uses of the system as claimed in the present invention include optimizing the fabrication of parts or scheduling the production of an assembly based on unique input variables such as quantity and dates required, amount of complex parts needed as well as the availability, in real time, of specially trained operators. The present invention also can be used to develop an optimized shipping schedule involving unique input variables such as required payload size, delivery due dates, types of material being shipped as well as the available resources such as availability of multiple trucks and trained operators and is also useful in optimizing traffic flow paths through crowded intersections or through checkpoints having such unique inputs as number of operators at the checkpoints, numbers of each types of vehicles to be checked such as passenger vehicles versus loaded parts vehicles and available resources such as number of checkpoint stations and trained operators for each type of vehicle.

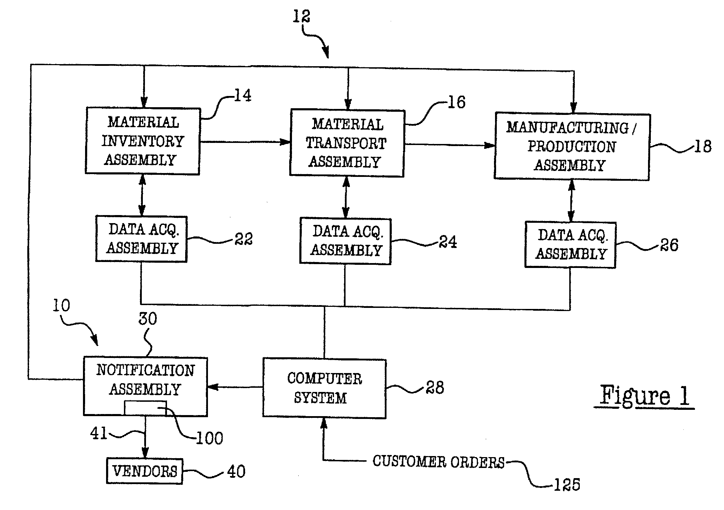

Referring now to Figure 1, there is shown a production optimization system 10 made in accordance with the teachings of the preferred embodiment of the invention and which is being used in operative combination with a conventional production or manufacturing assembly or facility 12. As used in this specification, the term "optimize" means to substantially and automatically control the manufacturing or product creation process according to some predetermined criteria or plurality of unique input variables which may vary in their respective degree of importance.

Particularly, production or manufacturing assembly or facility 12 includes a material inventory portion or assembly 14, a material transport portion or assembly 16, and a manufacturing/production portion or assembly 18. As shown, the material inventory assembly 14 is "operatively coupled" to the material transport assembly 16.

Particularly, the term "operatively coupled" means that portion or assembly 14 provides material, components or assemblies, in some manner, to the portion or assembly 16. Further, the term "material" means available resources such as raw material, components, devices, assemblies, partially formed or created assemblies, or any other tangible item needed to manufacture or create a certain item or good.

Similarly, the material transport assembly or portion 16 is "operatively coupled" to the manufacturing and production assembly portion 18. It should be realized that the invention is not limited to a certain type or architecture of a production or manufacturing facility or system but has a substantially wide applicability to a diverse range of manufacturing or production facilities or systems.

Production optimization system 10 includes data acquisition assemblies 22, 24, and 26 which are respectively, operatively, and communicatively coupled to the material inventory portion or assembly 14, to the material transport portion or assembly 16, and to the manufacturing/production portion or assembly 18. In one non-limiting embodiment of the invention, data acquisition assemblies 22, 24, and 26 are substantially identical although they may, in other non-limiting embodiments, be quite dissimilar.

Further, production optimization system 10 includes a computer system 28 or a controller which is operable under stored program control. The computer system 28 may, in one non-limiting embodiment of the invention, comprise a conventional and commercially available computer which is created by the IBM Corporation of Armonk, New York or a conventional and commercially programmable logic controller.

The computer system 28, in another non-limiting embodiment, may also include several computers which are tasked with providing a certain function and which cooperatively provide the functionality which is described within this description.

As shown, computer system 28 is communicatively and controllably coupled to the data acquisition assemblies 22, 24, and 26. Further, the production optimization system includes a notification assembly 30 which, in one non-limiting embodiment of the invention, is communicatively coupled to the material inventory portion or assembly 14, to the material transport portion or assembly 16, and to the manufacturing/production portion or assembly 18. In one non-limiting embodiment of the invention, the notification assembly 30 is operatively embedded within the computer system 28 and is communicatively coupled to material supply vendors 40, such as and without limitation by use of a global communications network 41.

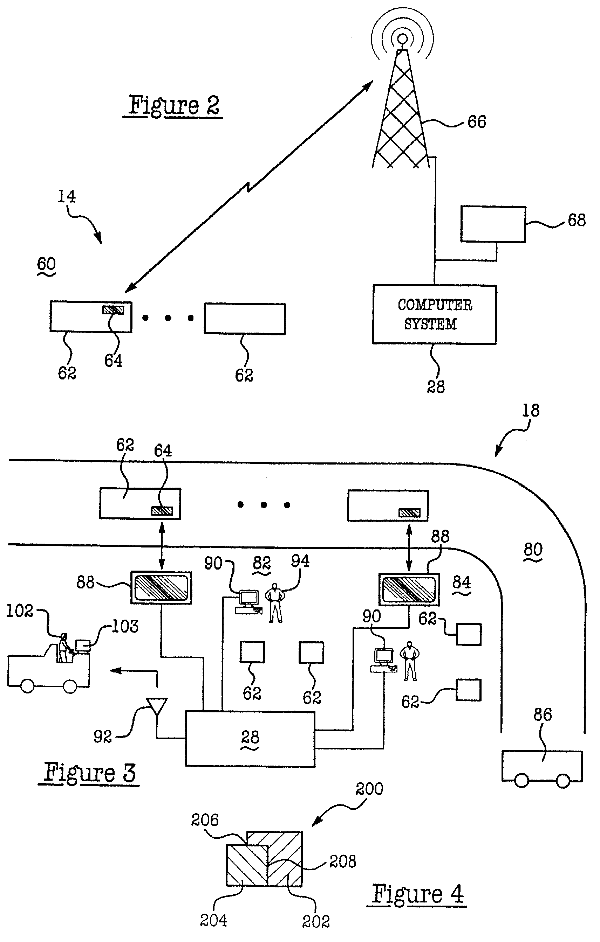

Referring now to Figure 2, there is shown one non-limiting embodiment of a material inventory portion or assembly 14. Particularly, material inventory portion or assembly 14 includes at least one storage area 60 which contains various components or raw materials (i.e., "materials" or "available resources") 62 which are needed to selectively create the desired goods or items 86. Each unique component or "piece" of raw material 62, in this non-limiting embodiment, carries or contains a selectively readable identification tag 64. By way of example and without limitation, the identification tag 64 may comprise a radio frequency identification tag or some other selectively readable tag such as that used by an optical bar code type scanner assembly. By way of further example, the "tag" can be an employee identification badge listing the unique qualities and training for that employee. The tag could also be placed on or integrated into vehicles so that a system for optimizing shipping schedules or vehicles through checkpoints can be easily identified, quantified and tracked in real time.

Further, the material inventory portion or assembly 14 includes a radio frequency antenna 66 communicatively coupled to a radio frequency transmitter/receiver assembly 68 and the assembly 68 is communicatively coupled to the computer system 28.

Each of the tags 64, in one non-limiting embodiment of the invention, uniquely identifies the type of component (e.g., engine assembly) or material (e.g., sheet metal) upon which each tag 64 is respectively placed. Computer system 28, by use of the radio transmitter and receiver unit 68 selectively interrogates each of the tags 64, thereby acquiring knowledge of the types of material 62 which are located in the storage facility 60 along with the respective location of each of the material or components 62 within the storage facility 60, thereby acquiring knowledge of the inventory levels within the facility 12. Computer system 28, by use of the radio transmitter/receiver assembly 68 also interrogates the tags 64, effective to determine the location and the "flow" of each of the material or components 62 within the facility 12. In this one non-limiting embodiment of the invention, tags 64 in combination with radio transmitter/receiver and antenna 66 cooperatively comprise the data acquisition assembly 22.

Referring now to Figure 3, there is shown one non-limiting example of a manufacturing/production assembly 18 which may be used in combination with the production optimization system 10 of the preferred embodiment of the invention. Particularly, the manufacturing/production assembly 18 includes a conveyor assembly 80 upon which some of the material or components 62 (e.g., a vehicular chassis) are selectively placed and which is effective to move the material or components 62 from one work station 82 to another work station 84, in order to allow a final product 86 (e.g., such as a vehicle) to be created. Other portions or types of components or materials 62 are located at or within various workstations 82, 84.

The assembly 18 may further include readers 88 which are adapted to "read" or interrogate the tags 64 and to identify the presence of the material or component 62 in respectively close proximity to these readers 88.

The information from the readers 88 is communicated to the computer system 28, effective to allow the computer system 28 to determine the location of each of the components and materials 62 upon the conveyor assembly 80. In this non-limiting embodiment, readers 88 cooperate with the tag 64 to form the data acquisition assembly 24. In another non-limiting embodiment of the invention, the previously delineated data acquisition assembly 22 may also provide information and operate in a substantially similar manner as to the data acquisition assembly 24, thereby obviating the need for data acquisition assembly 24.

Moreover, if both assemblies 22, 24 are used, one of the assemblies 22, 24 may provide a "check" for the other and conflicts may be resolved by the assembly 22, 24 "closest" to the actual material 62 whose location is desired to be obtained. For example, the data which is generated from the readers 88 may be used as a "check" for the data emanating from the assembly 22 since the antenna 66 is far removed from the material 62 which is upon the conveyor assembly 80.

The computer system 28 then uses this information to generate signals to display screens or monitors 90, effective to inform the assembly line personnel or assemblers 94 of the number and type of assemblies or components 62 which have yet to arrive to them by the conveyor assembly 80 and, by way of example and without limitation, the order that this material is to arrive at each of the workstations 82, 84.

The system can provide a "look ahead" based on time such as, for example, fifteen minutes or based on the number of parts in the queue such as, for example, 100 parts to allow for advanced planning for timely part ordering and delivery as will be explained further below. In this manner, the assemblers 94 may quickly determine the amount or type of components 62 which they are to respectively utilize in upcoming assembly operations.

The computer system 28 also may generate and transmit a signal, by use of an antenna 92 to an individual 102 having a pager 103 to bring certain components or materials 62 from the storage area 60 to the workstations 82, 84 in order to allow the assemblers 94 to have sufficient material or components 62 available to perform a desired assembly operation which are present upon the conveyor assembly 80. Thus, the system 10 provides an "early warning" to the inventory personnel 102 to provide needed materials 62 to the workstations 82, 84, before such material 62 is actually needed and allows for "optimal flow management" since the material 62 is brought to the workstations 82, 84 on an "as needed" basis and since only the actually needed material 62 is brought to these workstations 82, 84. This system can provide the operator with an exact number of the parts needed to complete a group of assemblies as well as provide a single, unique part needed to complete a unique assembly without causing an operator to delay in finding the needed part. This efficiency increases the number of completed assemblies per hour in a manufacturing setting.

In this non-limiting embodiment of the invention, the notification assembly 30 comprises the monitors 90, pager 103, and antenna 92. Additionally, the notification assembly 30 may comprise a communications interface assembly 100 which allows the material and/or component vendors 40 to be notified of needed components and assemblies 62, thereby allowing the vendors 40 to quickly respond to projected or future material needs.

Referring now to Figure 4, in the most preferred embodiment of the invention, each monitor 90 graphically provides the material information by the use of icons 200 and each icon 200 has two different colours 202, 204 that "touch" or abut on no more than three and no less than two respective sides 206, 208. In this manner, workers 94 may distinguish more than 256 different types of icons upon each of the monitors 90.

Using the part flow information, the present invention produces an optimized production schedule based on the current operating practice, assembly plant schedule requirements, and available resources such as materials, components, available equipment and trained operators. In operation, customer orders 125 for various types of completed units or products, such as final product 86, are received by the computer system 28.

These orders may be placed into a production/scheduling queue in a conventional manner. By way of example and without limitation, this queue may represent product orders which were received during some predetermined period of time and may initially group these orders by component type (e.g., orders for substantially the same type of final product 86 are contiguously grouped together in order to allow the manufacturing facility to sequentially produce the substantially similar products).

The groupings may then be arranged in the order of greatest profit margin being produced first. In this non-limiting example, the group which represents the lowest overall profit margin is produced last. In this manner, groups are scheduled in an order which is dependent upon the respective profit margin (e.g., in a descending order of profit margin realization). For each type of produced item or good, such as good 86, the computer system 28 maintains a respective listing of all materials and components 62 necessary to produce that item or good. Other conventional and initial scheduling algorithms may also be used.

In addition, the system allows for multiple unique inputs to be assembled onto the desired finished product. For example, it is expected that the plurality of parts, components and sub-components making up an entire automobile can be scheduled for inclusion onto a "custom ordered" vehicle in real time, from the time the customer places the order to the actual build of the vehicle. By monitoring available resources and notifying operators in advance of the needed parts, the present system provides notification and delivery of the needed parts in time, even if just a single one is necessary.

After the production schedule is completed according to some criteria and/or desired metrics, the computer system 28 reviews the amount and type of material and components 62 which are resident within the production facility 12 and initially determines whether sufficient amounts and types of such required materials and components 62 are available within the production facility 12. If sufficient amounts and types of materials and components 62 are available, the computer system 28 notifies the facility personnel that production is to be accomplished according to a certain schedule and allows the production to occur. If an insufficient amount of material and components 62 are available, the computer system 28 determines whether a sufficient amount of time exists before production begins to order and obtain such components and materials from the vendors 40. If sufficient time exists, computer system 28 automatically generates at least one material order, by use of interface portion 100, to at least one of the vendors 40.

The order specifies the amount, type, and delivery requirements of the needed material 62. Additionally, the computer system 28 may determine that sufficient material and components 62 exist in order to begin production according to the initially developed schedule but that, additional materials and components 62 are needed for desired goods 86 which are to be produced later in the schedule. In this situation, the computer 28 may allow production to begin and concomitantly order the "later needed" material from the vendors 40 provided that the computer system 28 determines that the material and components 62 may be obtained from the vendors by a required and/or desired date which allows production to occur according to the schedule.

During the production process, the computer system 28 continuously and/or periodically monitors the inventory levels of the material and components 62 within the production facility 12 in order to periodically and/or continuously ensure that sufficient amounts of materials and components 62 remain within the facility 12 in order to allow the production schedule to be desirably accomplished.

Importantly, should an unforeseeable event occur within the production facility 12 (e.g., a "breakdown" of a machine with a workstation 82, 84 which is necessary to create a desired type of final product 86), the computer system 28 modifies the production schedule according to some predetermined optimization weighing factors (e.g., ensuring that higher profit margin products can be built) and concomitantly ensures that the newly optimized production schedule may be accomplished by ensuring that the needed inventory or materials and components 62, necessary to complete the modified production schedule, are resident within the production facility 12. In this manner, the computer system 28 continues to optimize production according to the predetermined metrics or criteria.

The computer system 28, in one non-limiting embodiment of the invention, determines whether its commands are being accomplished by reviewing the component and material flow "through" the production facility 12 and by requiring personnel to provide the type of final good 86 which is sequentially produced, effective to allow the computer system 28 to compare its production schedule with the products which have actually been produced by the facility 12. That is, the computer system 28 determines which types of products 86 may be built without the "broken" machine and dynamically adjusts the production schedule to cause these types of products 86 to be built. Commands are then generated to the personnel 102, 94 informing them of the new schedule. The monitors 90 are updated to reflect the new schedule, on and by the computer 28 by use of assemblies 22, 24, 26 which verifies that such a schedule is being allowed. Moreover, the system 10 may also be adapted to resolve conflicts, by way of example and without limitation, by sensing the location of material by a first location and by using physical parameters of the system 12, such as conveyor speed to calculate the new location of the material 62.

The present invention has been described, by example, as a way for producing automotive components, assemblies or vehicles. It is to be understood that the present invention can be applied to manage any system having multiple variables to produce a desired, optimized output. It is to be further understood that the invention is not limited to the exact construction and method which has been illustrated and described above but that various changes and modifications may be made without departing from the scope of the invention.

## Claims

1. A method for producing products by the use of various materials and assemblies **characterised in that** the method includes the steps of creating a production schedule, monitoring said materials and said assemblies and dynamically modifying said production schedule in response to said monitoring of said materials and said assemblies.

2. A method as claimed in claim 1 wherein said step of creating a production schedule further comprises the steps of receiving customer orders, grouping said customer orders in a certain priority and determining said production scheduled based on said grouping.

3. A method as claimed in claim 1 or in claim 2 wherein said step of monitoring said materials and said assemblies further comprises the steps of determining a location of said materials and determining a quantity of said materials.

4. A method as claimed in any of claims 1 to 3 wherein said step of monitoring said materials and said assemblies further comprises the step of determining the operational status of said assemblies.

5. A method as claimed in any of claims 1 to 4 wherein said step of dynamically modifying said production schedule in response to said monitoring of said materials and said assemblies further comprises the steps of comparing a desired quantity described in said customer orders to said determined quantity of said materials, re-grouping said customer orders in a second certain priority based on said comparison and determining said modified production schedule based on said re-grouping.

6. A method as claimed in any of claims 1 to 5 wherein said step of dynamically modifying said production schedule in response to said monitoring of said materials and said assemblies further comprises the steps of notifying at least one assembly employee of said modified production schedule and notifying at least one material transport employee of said modified production schedule.

7. A method as claimed in any of claims 1 to 6 wherein said step of dynamically modifying said production schedule in response to said monitoring of said materials and said assemblies further comprises the steps of notifying at least one material supplier of said modified production schedule.

8. A method as claimed in claim 1 wherein said step of monitoring said materials and said assemblies comprises monitoring said production schedule, receiving a quantity of a final product type from at least one manufacturing employee and determining whether said quantity matches said production schedule.

9. A method as claimed in any of claims 1 to 8 further comprising the step of selectively ordering at least one of said materials in response to said monitoring of said materials.

10. A complexity management system (10) for managing a plurality of unique input variables and available resources to produce an optimized output **characterised in that** the complexity management system (10) includes a first portion (28) which selectively generates a demand schedule, a second portion (22, 24, 26) which monitors said unique input variables and the available resources and which generates a signal to the first portion (28), based upon the monitoring of the input variables and available resources, effective to cause the demand schedule to be modified dynamically in a certain manner so as to optimize said output.
